Europäisches Patentamt

European Patent Office

Office européen des brevets

(19)

(11) EP 0 706 099 A1

(12) DEMANDE DE BREVET EUROPEEN

(43) Date de publication:
10.04.1996 Bulletin 1996/15

(51) Int Cl.⁶: **G04C 13/11, H02K 41/06**

(21) Numéro de dépôt: 95810573.6

(22) Date de dépôt: 15.09.1995

(84) Etats contractants désignés:
**BE CH DE ES FR GB IE IT LI LU NL**

(30) Priorité: 03.10.1994 CH 2983/94

(71) Demandeurs:
• **Zafferri, Roberto**
**CH-6924 Sorengo TI (CH)**

• **R. AUDEMARS SA**
**CH-6814 Cadempino (CH)**

(72) Inventeur: **Brandestini, Marco**
**CH-6926 Montagnola (CH)**

(74) Mandataire:
**AMMANN PATENTANWAELTE AG BERN**
**Schwarztorstrasse 31**
**CH-3001 Bern (CH)**

(54) **Moteur pas-à-pas épicycloidal**

(57) Le stator du moteur comprend deux pièces polaires (1, 2) décalées axialement. Dans les ouvertures ou alésages de ces pièces polaires se trouve un rotor cylindrique (5) aimanté axialement. Le rotor (5) porte une denture exterieure (3), continuellement en prise avec une denture interne (4) du stator. Dans le stator non excité le rotor (5) assume une position stable par adhérence aux pièces polaires (1, 2). Grâce à l'excitation du stator par une impulsion de polarité convenable, le rotor est déplacé dans une position stable diamétralement opposée. Les dentures (3, 4) restent en prise pendant ce déplacement, d'où il résulte un déplacement angulaire du rotor, l'angle étant défini par la différence du nombre de dents des dentures (3, 4). Le moteur permet une réalisation miniaturisée et une commande simple par des impulsions de polarité alternativement opposée.

Fig. 2

EP 0 706 099 A1

## Description

La présente invention concerne un moteur pas-à-pas épicycloïdal comprenant un rotor avec une denture extérieure en prise avec une denture intérieure d'un stator. Des moteurs de ce type, de grandes dimensions et à excitation polyphasée, sont connus. Cependant, le succès de ces moteurs était limité et il est difficile de les miniaturiser et de simplifier leur commande pour une application horlogère.

Le but de la présente invention est de prévoir un moteur pas-à-pas épicycloïdal de petite dimension, efficace et de simple alimentation, ce moteur étant susceptible d'être utilisé dans une montre dans laquelle le rotor du moteur peut directement être accouplé à l'aiguille des secondes ou à l'aiguille des minutes. Ce but est atteint en ce que le stator comprend des pièces polaires qui définissent des positions stables du rotor et des déplacements du rotor entre ces positions stables pendant lesquelles lesdites dentures restent en prise.

L'invention sera expliquée plus en détail à l'aide du dessin qui représente un exemple d'exécution du moteur.

Figure 1          est une coupe suivant la ligne I-I en figure 2,

figure 2          est une vue latérale avec les bobines en coupe,

figure 3          montre la géométrie de l'ouverture ou alésage du stator,

figures 4 et 5          montrent les dentures du rotor resp. du stator,

figure 6          montre plusieurs positions du rotor dans le stator, et les

figures 7 et 8          montrent le positionnement du moteur dans une montre,

figures 9 et 10          montrent l'exécution d'un tel moteur avec une seule bobine.

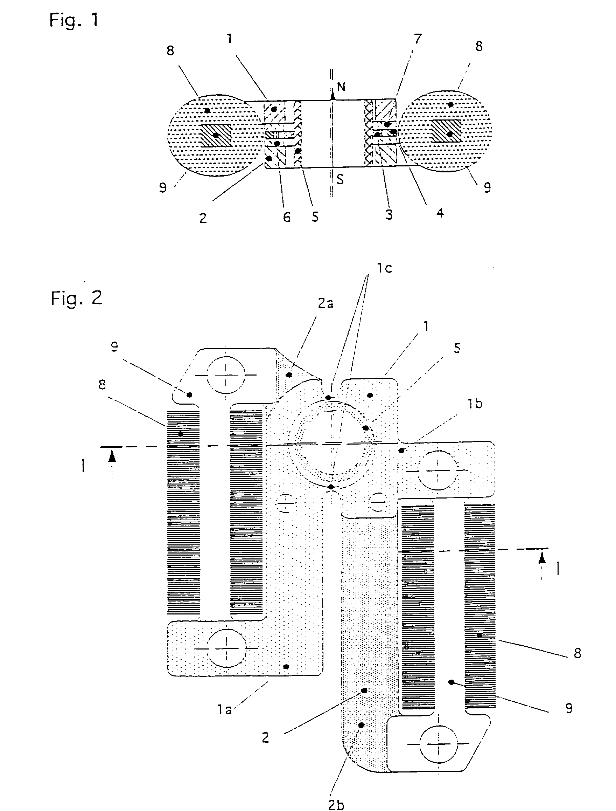

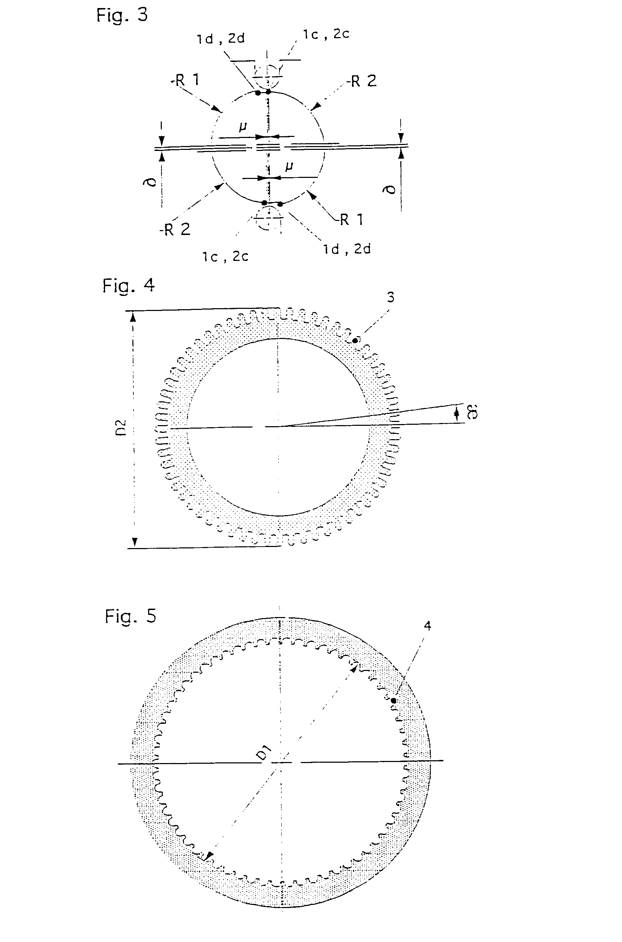

Le stator du moteur comprend deux pièces polaires 1 et 2 décalées axialement et présentant les deux une ouverture ou un alésage congru de la forme indiquée en figure 3. Les deux pièces polaires présentent des isthmes 1c qui relient deux zones essentiellement semi-cylindriques des ouvertures des pièces polaires. Cependant, ces deux zones semi-cylindriques sont composées de deux parties avec des rayons R1, R2, légèrement différents et ayant une excentricité à resp. μ légèrement différente. Il résulte ainsi une ouverture avec des épaulements 1d, 2d. Entre les deux pièces polaires 1 et 2, le stator comprend une denture intérieure 4 en prise avec une denture extérieure 3 du rotor 5. Le rotor 5 est un cylindre creux aimenté axialement tel qu' indiqué en figure 1. Entre les pièces polaires 1 et 2 et les dentures 3 et 4 sont situées des bagues 6 et 7 en matière adéquate qui forment un palier axial pour la denture 3 resp. le rotor 5. Cependant, ces paliers permettent un jeu libre du rotor en direction radiale. Le stator présente deux bobines 8 qui se trouvent sur des noyaux 9 reliés aux pièces polaires 1 et 2 par des ponts 1a, 1b, 2a et 2b. Le rotor 5 est accouplé à un organe à commander, par exemple une aiguille de montre, à l'aide d'un accouplement non représenté. Etant donné que le rotor 5 est déplacé dans un mouvement épicycloïdal où une rotation est superposée à des déplacements radiaux, cet accouplement doit permettre un déplacement radial relatif entre le rotor 5 et l'élément entraîné par celui-ci. Les bobines 8 sont branchées en série ou en parallèle et excitées en commun de façon que les deux bobines excitent les pièces polaires 1 et 2 alternativement avec une polarité opposée. Cela signifie que les bobines 8 sont alimentées alternativement avec des impulsions de polarité opposée de sorte que le moteur peut être commandé par l'électronique habituelle d'une montre.

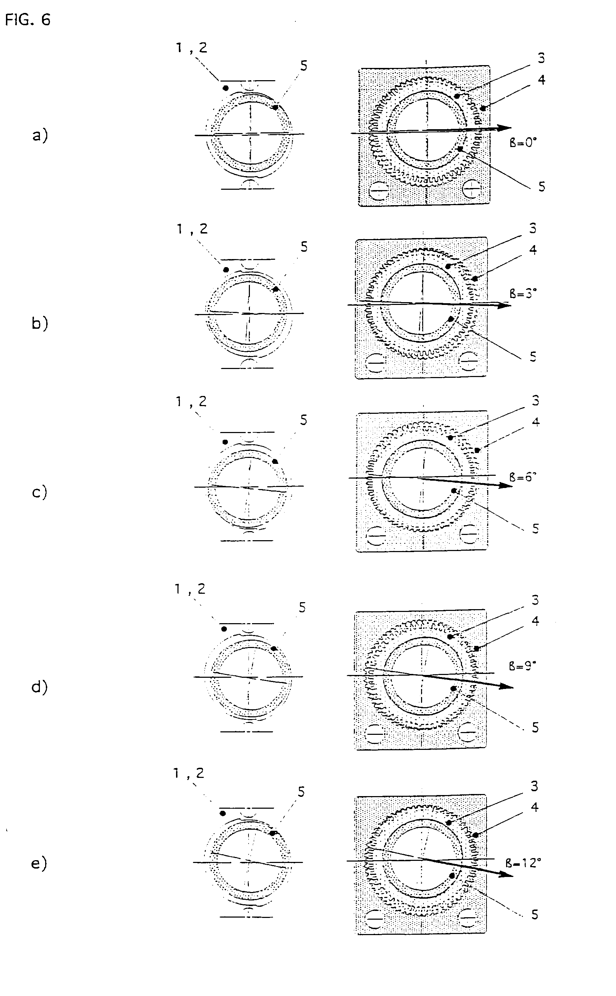

Les figures 2 et 6a montrent une position stable du rotor dans le stator. Par son aimantation permanente le rotor adhère aux pièces polaires 1 et 2 non excitées. La figure 6a indique que cette position du rotor correspond à une position 0 de la position angulaire du rotor. Lors de la prochaine excitation du stator, le rotor est déplacé dans la position indiquée en figure 6b. Pendant ce déplacement les dentures 3 et 4 restent en prise et la position angulaire du rotor varie par exemple de 3°. A la fin de l'impulsion d'excitation le rotor se déplace dans la position stable selon la figure 6c. Le déplacement angulaire total du rotor pendant son déplacement de la position selon la figure 6a à la position diamètralement opposée selon figure 6c est de 6°. Si le rotor est directement accouplé à une aiguille des secondes ou à une aiguille des minutes, ce déplacement effectué par une impulsion de commande correspond au déplacement de l'aiguille par une seconde resp. une minute. Le rotor est déplacé dans la position selon la figure 6d par la prochaine impulsion d'excitation et, après cette impulsion, reprend la position initiale selon la figure 6a resp. figure 6e. La position angulaire du rotor a été déplacée de nouveau de 6° par l'impulsion d'entraînement.

Les figures 4 et 5 indiquent la géométrie des dentures 3 et 4. Lorsqu'on définit:

N1 =          nombre de dents stator
N2 =          nombre de dents rotor
D1 =          diamètre externe du stator
D2 =          diamètre de fond de la denture du rotor
α =          pas angulaire des dent du rotors

Pour application horlogère, les relations qui lient ces dimensions sont:

$$N1 - N2 > 1$$
$$\alpha = 12° / (N1 - N2)$$

et, en général:

$$D1 / D2 = N1 / N2$$

Ces dernières dimensions peuvent légèrement varier afin de compenser les tolérances de fabrication.

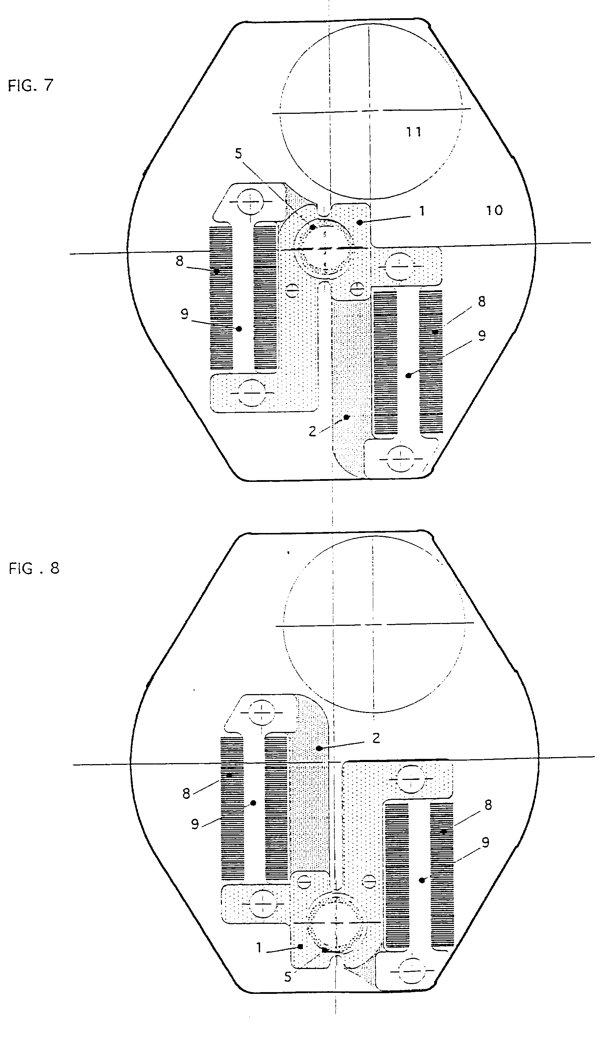

Les figures 7 et 8 montrent schématiquement les possibilités d'intégrer le moteur dans un mouvement horloger. Selon la figure 7 le rotor 5 du moteur se trouve au centre du support 10 du mouvement, la place libre étant occupée par la pile 11. Le rotor est directement accouplé à l'aiguille des secondes ou l'aiguille des minutes et au train d'engrenages, pour l'entraînement de la ou des autres aiguilles.

Selon la figure 8, le rotor 5 est décalé par rapport au centre du mouvement où il est accouplé directement à une petite aiguille de secondes.

Il est aussi possible de réaliser le même fonctionnement avec une autre forme, non circulaire, des ouvertures ou alésages des pièces polaires.

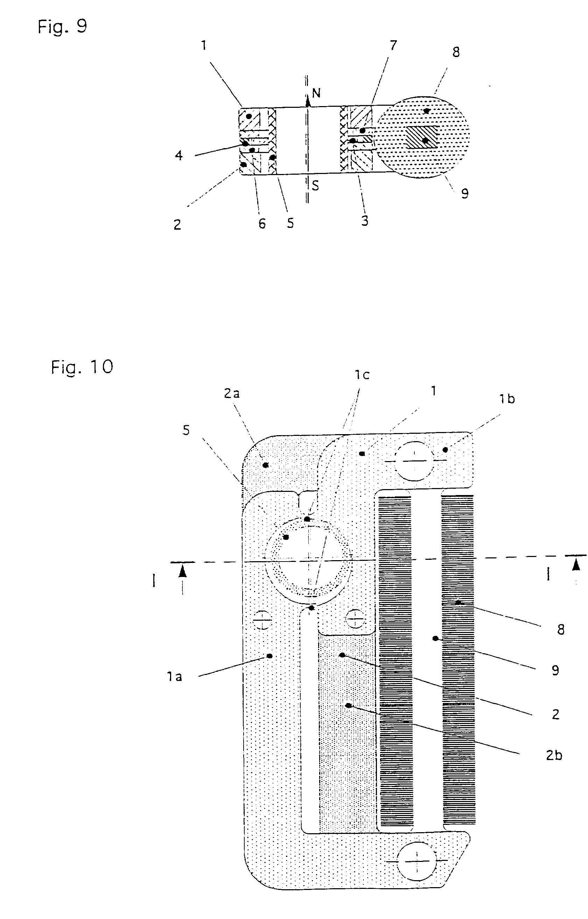

Les figures 9 et 10 montrent un moteur avec une seule bobine 8. Les pièces polaires 1 et 2 sont fixées sur les faces opposées du noyau 9 à une distance axiale. Par ailleur la construction du stator et du rotor et le fonctionnement du moteur correspondent à ceux illustrés et décrits ci-devant.

## Revendications

1.  Moteur pas-à-pas épicycloïdal comprenant un rotor (5) avec une denture extérieure (3) en prise avec une denture intérieure (4) d'un stator (1, 2), caractérisé en ce que le stator comprend des pièces polaires (1, 2) qui définissent des positions stables du rotor (5) et des déplacements du rotor (5) entre ces positions stables, lesdites dentures restant en prise pendant ces déplacements.

2.  Moteur selon la revendication 1, caractérisé en ce que le stator (1, 2) comprend un enroulement (8) monophasé.

3.  Moteur selon la revendication 1 ou 2, caractérisé en ce que le rotor comprend un aimant cylindrique (5) déplaçable dans une ouverture non-cylindrique formée par les pièces polaires (1, 2) du stator.

4.  Moteur selon l'une des revendications 1 à 3, caractérisé en ce que le stator comprend deux pièces polaires (1, 2) décalées axialement et le rotor (5) est aimanté axialement, les deux pièces polaires (1, 2) du stator étant de polarité opposée lors de l'excitation du stator.

5.  Moteur selon l'une des revendications 1 à 4, caractérisé en ce que lesdites positions stables sont définies par l'adhérence du rotor (5) aimanté auxdites pièces polaires (1, 2) du stator.

6.  Moteur selon l'une des revendications 1 à 5, caractérisé en ce que les pièces polaires (1, 2) présentent deux zones (R1, R2) essentiellement semi-cylindriques et excentriques.

7.  Moteur selon la revendication 6, caractérisé en ce que les deux zones (R1, R2) des pièces polaires (1, 2) sont reliées par des isthmes (1c, 2c).

8.  Moteur selon l'une des revendications 6 ou 7, caractérisé en de que chaque zone est constituée par deux parties cylindriques de rayon (R1, R2) légèrement différent et d'excentricité ($\delta$, $\mu$) légèrement différente.

9.  Moteur selon l'une des revendications 4 à 8, caractérisé en ce que des paliers (6, 7) sont placés entre les pièces polaires (1, 2), ladite denture extérieure (3) du rotor (5) étant axialement guidé entre ces paliers.

10. Moteur selon l'une des revendications 1 à 9, caractérisé en ce que le stator présente deux bobines (8), des pièces polaires (1, 2) communes étant formées entre les deux bobines.

11. Moteur selon l'une des revendications 1 à 9, caractérisé par une seule bobine (8) avec un noyau (9) des pièces polaires (1, 2) étant montées à une distance axiale à des faces apposées dudit noyau.

12. Utilisation du moteur selon la revendication 1, comme moteur horloger agissant directement sur une aiguille, caractérisé en ce qu'il est alternativement alimenté par des impulsions de polarité opposée.

Fig. 1

Fig. 2

Fig. 3

Fig. 4

Fig. 5

FIG. 6

a)

b)

c)

d)

e)

FIG. 7

FIG . 8

Fig. 9

Fig. 10

EP 0 706 099 A1

Office européen des brevets

**RAPPORT DE RECHERCHE EUROPEENNE**

Numero de la demande

EP 95 81 0573

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 038 744 (CENTRE TECHNIQUE DE L' INDUSTRIE HORLOGERIE "CETEHOR") * figure 2 * --- | 1 | G04C13/11 H02K41/06 |
| A | DE-A-25 14 802 (K. K. SUWA SEIKOSHA) * figure 1 * --- | 1 | |
| A | FR-A-2 612 013 (CROUZET S. A.) --- | 1 | |
| A | FR-A-2 612 014 (CROUZET S. A.) ----- | 1 | |
| | | | **DOMAINES TECHNIQUES RECHERCHES (Int.Cl.6)** G04C H02K |

Le présent rapport a été établi pour toutes les revendications

| Lieu de la recherche | Date d'achèvement de la recherche | Examinateur |
|---|---|---|
| LA HAYE | 20 Décembre 1995 | Exelmans, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)